Europäisches Patentamt

European Patent Office

Office européen des brevets

(19)

(11) Veröffentlichungsnummer: **0 225 449**
**B1**

(12)

# EUROPÄISCHE PATENTSCHRIFT

(45) Veröffentlichungstag der Patentschrift:
14.06.89

(21) Anmeldenummer: 86113943.4

(22) Anmeldetag: 08.10.86

(51) Int. Cl.⁴: **B23B 31/12, B23B 51/00**

(54) **Bohrfutter.**

(30) Priorität: 08.11.85 DE 3539655

(43) Veröffentlichungstag der Anmeldung:
16.06.87 Patentblatt 87/25

(45) Bekanntmachung des Hinweises auf die Patenterteilung:
14.06.89 Patentblatt 89/24

(84) Benannte Vertragsstaaten:
CH DE FR GB IT LI

(56) Entgegenhaltungen:
DE-U- 8 510 262
GB-A- 2 136 724

(73) Patentinhaber: Röhm GmbH, Heinrich-Röhm-Strasse 50,
D-7927 Sontheim(DE)

(72) Erfinder: Mack, Hans-Dieter,
Richard-Wagner-Strasse 11, D-7927 Sontheim(DE)

(74) Vertreter: Fay, Hermann, Dipl.-Phys. Dr.,
Ensingerstrasse 21 Postfach 1767, D-7900 Ulm
(Donau)(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Bohrfutter für ein Werkzeug zum drehenden und drehschlagenden Bohren, mit mindestens zwei in zur Futterachse schrägen Führungen zentrisch zur Futterachse verstellbaren und in ihren Führungen begrenzt verdrehbaren Spannbacken, deren der Futterachse zugewandter Spannbereich eine der Führung des Werkzeugschaftes an seiner Außenfläche dienende Führungsfläche und einen gegen die Futterachse über die Führungsfläche vorstehenden Vorsprung aufweist, der durch Eingriff in Ausnehmungen am Werkzeugschaft der drehenden Mitnahme und axialen Spielbegrenzung des Werkzeugs dient, wobei an jeder Spannbacke in Umfangsrichtung der mittig angeordnete Vorsprung und die Führungsfläche nebeneinander liegen und in einer zur Futterachse im wesentlichen parallelen Kante aneinander grenzen, und wobei die Führungsfläche radial in Richtung auf die Futterachse überall vor einer Sekantenebene liegt, die senkrecht zu der in der Futterachse verlaufenden Mittelebene der Spannbacke durch die Kante zwischen der Führungsfläche und dem Vorsprung geht.

Bei einem im wesentlichen etwa aus der DE-OS 33 10 146 bekannten Bohrfutter dieser Art befinden sich die Führungsflächen in Umfangsrichtung des Bohrfutters beidseits des Vorsprungs in jeweils gleicher Breite. Die Führungsfläche selbst ist in Form einer Kreiszylinderfläche konkav gewölbt. Das hat zur Folge, daß eine exakte Anlage der Führungsfläche an der zylindrischen Mantelfläche des Werkzeugschaftes beidseits der Ausnehmungen nur für Werkzeuge besteht, deren Schaftradius gleich dem Wölbungsradius der Führungsfläche ist. Nur in diesem Fall besteht eine klare Funktionsaufteilung zwischen der Führungsfläche und dem Vorsprung: Der Vorsprung bewirkt die Drehmitnahme, die Führungsfläche die exakte Führung und Zentrierung des Werkzeugs. Ist aber der Schaftradius kleiner als der Wölbungsradius der Führungsfläche, so erfolgt entweder die Drehmitnahme und die Führung des Werkzeugs allein durch den Vorsprung, was mit einer erheblichen Verschlechterung der Führung und Zentrierung des Werkzeugs im Bohrfutter verbunden sein kann, oder die in der Spannbackenführung im Bohrfutter um ihre Führungsachse etwas verdrehbaren Spannbacken werden durch das vom Werkzeugschaft über die in seine Ausnehmungen eingreifenden Vorsprünge auf die Spannbacken ausgeübte Drehmoment geringfügig verdreht, bis der in Drehrichtung des Bohrfutters dem Vorsprung voranlaufende Teil der Führungsfläche sich linienhaft gegen die Mantelfläche des Werkzeugschaftes anlegt, wobei dort wegen dieser nur linienhaften Anlage sehr hohe lokale Kraftdichten entstehen, die zu entsprechend hoher Reibung zwischen dem Werkzeugschaft und der ihm anliegenden Führungsfläche und zu allen damit verbundenen Nachteilen führt, wie insbes. sehr hohem Spannbacken- und Werkzeugverschleiß, der Materialabtrag und/oder -verformungen zur Folge hat, wodurch die Spannbacken nur noch mehr gedreht werden, weil an dem in Drehrichtung nachlaufenden Teil der Führungsfläche und an der sie abstützenden Mantelfläche des Werkzeugschaftes nur geringfügige Beanspruchungen auftreten und dort dementsprechend kein nennenswerter Verschleiß stattfindet. Die mit der Betriebsdauer zunehmende Verdrehung der Spannbacken verschärft das Verschleißverhalten, führt aber auch zur Gefahr einer Verklemmung des Werkzeugschaftes zwischen den Spannbacken, wodurch die axiale Beweglichkeit des Werkzeugs im Bohrfutter und entsprechend der Bohrfortschritt zunehmend leiden.

Der Erfindung liegt die Aufgabe zugrunde, bei einem Bohrfutter der eingangs genannten Art die Spannbacken so auszubilden, daß Verdrehungen der Spannbacken in ihrer Führung auch nach längerer Betriebsdauer möglichst gering bleiben.

Diese Aufgabe wird nach der Erfindung dadurch gelöst, daß die Führungsfläche in der dem Bohren entsprechenden Drehrichtung des Bohrfutters nur vor dem Vorsprung vorgesehen ist und die in Drehrichtung rückwärts an den Vorsprung anschließende (nachlaufende) Fläche der Spannbacke überall radial in Richtung von der Futterachse weg jenseits der Sekantenebene verläuft.

Diese erfindungsgemäße Ausbildung der Spannbacken hat zur Folge, daß sich die Spannbacken mit ihrer dem Vorsprung jeweils nachlaufenden Fläche nie dem Werkzeugschaft anlegen können, daß die Spannbackenanlage am Bohrerschaft vielmehr ausschließlich durch den Vorsprung selbst und die ihm in Drehrichtung voranlaufende Führungsfläche bestimmt ist. Diese Backenanlage nur am Vorsprung und der ihm voranlaufenden Führungsfläche resultiert in erheblich geringeren Spannbackenverdrehungen, und zwar auch noch nach größerer Betriebsdauer, weil die Spannbackenanlage am Vorsprung und an der ihm voranlaufenden Führungsfläche gleichermaßen dem Verschleiß unterworfen ist, die Spannbacken sich also dort gleicherweise in den Werkzeugschaft einarbeiten können, ohne daß damit nennenswerte Verdrehungen der Spannbacken verbunden wären. Im Ergebnis wird durch die Erfindung eine in jeder Hinsicht genau definierte Zweipunktanlage jeder Spannbacke am Werkzeugschaft geschaffen, die eine gegen Verschleiß weitgehend stabile Drehlage der Spannbacken in ihren Führungen gewährleistet.

Eine bevorzugte Ausführungsform der Erfindung ist dadurch gekennzeichnet, daß die nachlaufende Fläche in Bezug auf die Futterachse konkav gewölbt ist und die Wendeachse zwischen dieser konkaven Fläche und der konvex gewölbten Fläche des Vorsprungs etwas in der Sekantenfläche verläuft. Trotz dieser hinter die Sekantenfläche radial nach außen zurückverlegten nachlaufenden Fläche der Spannbacke empfiehlt es sich, daß die Spannbacken auch weiterhin an dem in Drehrichtung des Bohrfutters nachlaufenden Rand eine Anschlagfläche zum Anschlag der benachbarten Spannbacke in der dem kleinsten Spanndurchmesser entsprechenden Backenstellung aufweisen, so daß der Anschlag der Spannbacken aneinander in an sich bekannter Weise den kleinsten Spanndurchmesser festlegen.

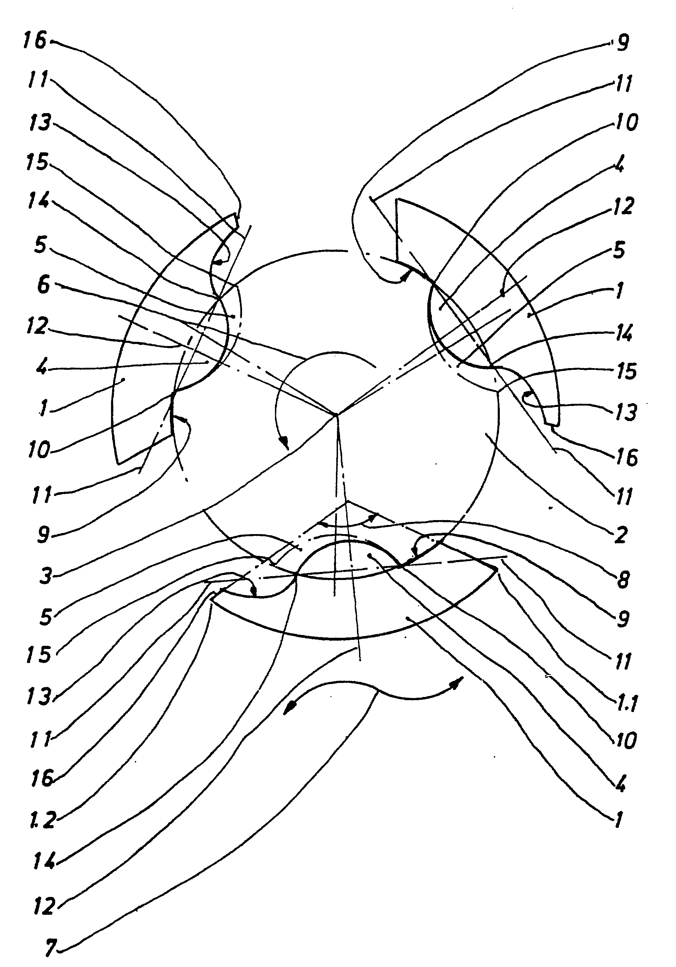

Im folgenden wird die Erfindung an einem in der Zeichnung schematisch dargestellten Ausführungsbeispiel näher erläutert. Die einzige Figur zeigt das erfindungsgemäße Bohrfutter mit darin gehaltenem Werkzeug in nur schematisch dargestelltem Querschnitt senkrecht zur Futterachse unter Wiedergabe jeweils nur des Werkzeugschaftes und der Spannbacken des Bohrfutters.

In der Zeichnung sind die Spannbacken des Bohrfutters mit 1 und der Werkzeugschaft des zum drehenden und drehschlagenden Bohren dienenden Werkzeuges mit 2 bezeichnet. Das Bohrfutter besitzt im Ausführungsbeispiel drei zentrisch zur Futterachse 3 verstellbare Spannbacken 1, die sich in Umfangsrichtung zwischen ihren Rändern 1.1 und 1.2 über einen Winkel 8 von 120° erstrecken, so daß der Anschlag der Spannbacken 1 aneinander an ihren Rändern 1.1, 1.2 den kleinstmöglichen Spanndurchmesser bestimmt. Der der Futterachse 3 zugewandte Spannbereich der Spannbacken 1 besitzt eine der Führung des Werkzeugschaftes 2 an seiner Mantelfläche dienende Führungsfläche 9 und einen gegen die Futterachse 3 aus der Führungsfläche 9 vorstehenden Vorsprung 4, der durch Eingriff in eine Ausnehmung 5 am Werkzeugschaft 2 der drehenden Mitnahme und axialen Spielbegrenzung des Werkzeugs dient, wozu - wie aus der Zeichnung nicht erkennbar ist, - wenigstens eine der Ausnehmungen 5 axial zum futterseitigen Schaftende hin geschlossen ist, so daß der Vorsprung 4 an diesem Ende der Ausnehmung 5 einen Anschlag gegen axiales Herausfallen des Werkzeugs aus dem Bohrfutter bildet. Die dem Bohren entsprechende Drehrichtung des Bohrfutters ist durch den Pfeil 6 gekennzeichnet. Das dabei zwischen den Spannbacken 1 und dem Werkzeugschaft 2 zu übertragende Drehmoment führt an den Spanbacken 1 selbst zu einem Drehmoment, das die Spannbacken in ihrer jeweiligen Führung im Bohrfutter in einer durch den Dopelpfeil 7 angedeuteten Weise zu verdrehen versucht, nämlich mit dem in Drehrichtung des Bohrfutters voranlaufenden Rand 1.1 radial einwärts und mit dem nachlaufenden Rand 1.2 radial auswärts. An jeder Spannbacke 1 ist der Vorsprung 4 in Umfangsrichtung mittig angeordnet. Der Vorsprung 4 und die Führungsfläche 9 liegen in Drehrichtung des Bohrfutters nebeneinander und grenzen in einer zur Futterachse 3 im wesentlichen paralle len Kante 10 aneinander. Die Führungsfläche 9 liegt dabei radial in Richtung auf die Futterachse 3 hin überall vor einer Sekantenebene 11, die senkrecht zu der in der Futterachse 3 verlaufenden Mittelebene 12 der Spannbacke 1 durch die Kante 10 zwischen der Führungsfläche 9 und dem Vorsprung 4 geht. Die Führungsfläche 9 ist in der dem Bohren entsprechenden Drehung des Bohrfutters (Pfeil 6) nur vor dem Vorsprung 4 vorgesehen. Die in Drehrichtung rückwärts an den Vorsprung 4 anschließende, also dem Vorsprung 4 nachlaufende Fläche 13 der Spannbacke 1 verläuft überall radial in Richtung von der Futterachse 3 weg jenseits der Sekantenebene 11. Diese nachlaufende Fläche 13 kann also nie am Werkzeugschaft 2 zur Anlage kommen, und zwar bei jedem Schaftdurchmesser bis zum größtmöglichen Spanndurchmesser des Bohrfutters. Die Anlage der Spannbacken 1 am Werkzeugschaft 2 erfolgt somit ausschließlich an der vorderen Führungsfläche 9 und am Vorsprung 4 selbst, wobei sich die Spannbacke 1 in ihrer Führung geringfügig verdrehen kann, bis sich gleichsam eine Zweipunktanlage der Spannbacke 1 am Werkzeugschaft 2 einstellt. Diese Einstellung ist durch die dem Vorsprung 4 nachlaufende Fläche 13 völlig unbeeinflußt, da diese Fläche 13 mit dem Werkzeugschaft 2 nicht in Berührung kommt, und zwar auch dann nicht, wenn sich während der Betriebsdauer die Spannbacke 1 mit ihrer vorderen Führungsfläche 9 und dem Vorsprung 4 infolge Verschleißes tiefer in den Werkzeugschaft 2 einarbeiten sollte. Die Drehlage der Spannbacke 1 bleibt auch bei solchen Verschleißerscheinungen praktisch unverändert, so daß die Gefahr von Verklemmungen der Spannbacken 1 in ihren Führungen einerseits und des Werkzeugschaftes 2 zwischen den Spannbacken 1 andererseits vermieden wird.

Die nachlaufende Fläche 13 ist in Bezug auf die Futterachse 3 konkav gewölbt, wobei die Wendeachse 14 zwischen dieser konkaven Fläche 13 und der konvex gewölbten Fläche des Vorsprungs 4 etwa in der Sekantenfläche 11 verläuft, so daß im Ergebnis auch eine Anlage der Spannbacke 1 etwa an der in Drehrichtung des Bohrfutters hinteren Kante 15 der Ausnehmung 5 vermieden wird. Trotz dieser konkaven Ausbildung der Fläche 13 besitzen die Spannbacken 1 in üblicher Weise an dem in Drehrichtung des Spannfutters nachlaufenden Rand 1.2 eine Anschlagfläche 16 zum Anschlag der benachbarten Spannbacke in der dem kleinsten Spanndurchmesser entsprechenden Backenstellung, was allerdings in der Zeichnung nicht dargestellt ist und auch keiner weiteren Erläuterung bedarf.

**Patentansprüche**

1. Bohrfutter für ein Werkzeug zum drehenden und drehschlagenden Bohren, mit mindestens zwei in zur Futterachse (3) schrägen Führungen zentrisch zur Futterachse (3) verstellbaren und in ihren Führungen begrenzt verdrehbaren Spannbacken (1), deren der Futterachse (3) zugewandter Spannbereich eine der Führung des Werkzeugschaftes (2) an seiner Außenfläche dienende Führungsfläche (9) und einen gegen die Futterachse (3) über die Führungsfläche (9) vorstehenden Vorsprung (4) aufweist, der durch Eingriff in Ausnehmungen (5) am Werkzeugschaft (2) der drehenden Mitnahme und axialen Spielbegrenzung des Werkzeugs dient, wobei an jeder Spannbacke (1) in Umfangsrichtung der mittig angeordnete Vorsprung (4) und die Führungsfläche (9) nebeneinander liegen und in einer zur Futterachse (3) im wesentlichen parallelen Kante (10) aneinander grenzen, und wobei die Führungsfläche (9) radial in Richtung auf die Futterachse (3) überall vor einer Sekantenebene (11) liegt, die senkrecht zu der in der Futterachse (3) verlaufenden Mittelebene (12) der Spannbacke (1) durch die Kante (10) zwischen der Führungsfläche (9) und dem Vorsprung (4) geht, dadurch gekennzeichnet, daß die Führungsfläche (9) in der dem Bohren entsprechenden Drehrichtung des Bohrfutters nur vor dem Vorsprung (4) vorgesehen ist und die in Drehrichtung rückwärts an den Vorsprung (4) anschließende (nachlaufende) Fläche (13) der Spannbacke (1) überall radial in Richtung von der Futterachse (3) weg jenseits der Sekantenebene (11) verläuft.

2. Bohrfutter nach Anspruch 1, dadurch gekennzeichnet, daß die nachlaufende Fläche (13) in Bezug auf die Futterachse (3) konkav gewölbt ist und die Wendeachse (14) zwischen dieser konkaven Fläche (13) und der konvex gewölbten Fläche des Vorsprungs (4) etwa in der Sekantenfläche (11) verläuft.

3. Bohrfutter nach Anspruch 1 oder 2, dadurch gekennzeichnet, daß die Spannbacken (1) an dem in Drehrichtung des Bohrfutters nachlaufenden Rand (1.2) eine Anschlagfläche (16) zum Anschlag der benachbarten Spannbacke in der dem kleinsten Spanndurchmesser entsprechenden Backenstellung aufweisen.

## Claims

1. Drill chuck for a tool for rotary and rotary percussion drilling, comprising at least two chuck jaws (1) in guideways at an angle to the chuck axis (3), radially adjustable with respect to the chuck axis (3), and limitedly rotatable in their guideways, each clamping region facing the chuck axis having a guide surface (9) serving to guide the tool shank (2) at its external surface, and a projection (4) extending beyond the guide surface (9) towards the chuck axis (3), said projection engaging into recesses (5) on the tool shank (2) and thus serving to rotate the tool and define its axial clearance, wherein in the circumferential direction on each chuck jaw (1), the centrally disposed projection (4) and the guide surface (9) are adjacent and meet in an edge (10) essentially parallel to the chuck axis (3), and the guide surface (9) extending radially towards the chuck axis (3) lies wholly in front of a secant plane (11), which is perpendicular to the median plane (12) of the chuck jaw (1) containing the chuck axis (3), through the edge (10) between the guide surface (9) and the projection (4), characterised in that the guide surface (9) in the direction of rotation of the drill chuck during drilling is provided only in front of the projection (4), and the whole of the surface (13) of the chuck jaw (1) following (trailing behind) the projection (4) at the rear in the direction of rotation extends radially away from the chuck axis (3) on the other side of the secant plane (11).

2. Drill chuck according to claim 1, characterised in that the surface (13) trailing with respect to the chuck axis (3) is concave, and the axis of turn (14) between this concave surface (13) and the convex surface of the projection (4) lies approximately in the secant surface (11).

3. Drill chuck according to claim 1 or 2, characterised in that, on the edge (1.2) trailing in the direction of rotation of the drill chuck, the chuck jaws (1) have a stop face (16) to fix the adjacent jaw in the jaw position corresponding to the lowest chucking capacity.

## Revendications

1. Mandrin porte-foret pour un outil de perçage à rotation et à roto-percussion, comprenant au moins deux mâchoires de serrage (1) déplaçables concentriquement à l'axe du mandrin (3) dans des guidages inclinés par rapport à l'axe du mandrin (3) et pouvant être tournées de manière limitée dans leurs guidages, dont la surface de serrage dirigée vers l'axe du mandrin (3) présente une surface de guidage (9) servant au guidage de la tige de l'outil (2) sur sa face extérieure, et une saillie (4) qui dépasse de la surface de guidage (9) en direction de l'axe du mandrin (3) et qui, par engagement dans des évidements (5) sur la tige de l'outil (2), sert à l'entraînement en rotation et à la limitation du jeu axial de l'outil, sur chaque mâchoire de serrage (1), dans le sens circonférentiel, la saillie (4) située au milieu et la surface de guidage (9) étant juxtaposées et se touchant en une arête (10) sensiblement parallèle à l'axe du mandrin (3), et la surface de guidage (9) se situant partout, radialement en direction de l'axe du mandrin (3), en avant d'un plan de sécante (11) qui passe, perpendiculairement au plan médian (12) de la mâchoire de serrage (1) placé dans l'axe du mandrin (3), par l'arête (10) entre la surface de guidage (9) et la saillie (4), caractérisé par le fait que, dans le sens de rotation du mandrin porte-foret correspondant au perçage, la surface de guidage (9) n'est prévue qu'en avant de la saillie (4) et que la surface (13) de la mâchoire de serrage (1) se raccordant à la saillie (4), en arrière (postérieure) dans le sens de rotation, s'étend partout au-delà du plan de sécante (11) en s'écartant radialement de l'axe du mandrin (3).

2. Mandrin porte-foret selon la revendication 1, caractérisé par le fait que la surface postérieure (13) présente une courbure concave par rapport à l'axe du mandrin (3) et que l'axe d'inflexion (14) entre cette surface concave (13) et la surface à courbure convexe de la saillie (4) s'étend à peu près dans la surface de sécante (11).

3. Mandrin porte-foret selon l'une des revendications 1 ou 2, caractérisé par le fait que les mâchoires de serrage (1) présentent sur le bord (1.2) postérieur dans le sens de rotation du mandrin porte-foret une surface d'arrêt (16) pour la venue en butée de la mâchoire de serrage voisine dans la position de mâchoire correspondant au plus petit diamètre de serrage.